# FASCICULE DE BREVET EUROPEEN

(11) **EP 1 925 965 B1**
(45) Date de publication et mention de la délivrance du brevet: **10.11.2010**
(21) Numéro de dépôt: 07121081.9
(22) Date de dépôt: 20.11.2007
(51) Int. Cl.: G02B 27/14, B24B 13/00, G02B 23/00

(54) **Procédé de fabrication de surfaces optiques pour la réalisation d'assemblages aptes à réarranger un ou des faisceau(x) optique(s)**
Verfahren zur Herstellung von optischen Flächen zur Umsetzung von Baugruppen, die ein oder mehrere optische Strahlen umordnen können
Method for manufacturing optical surfaces for the production of assemblies capable of rearranging one or more light beams

(30) Priorité: 24.11.2006 FR 0610316
(43) Date de publication de la demande: 28.05.2008
(73) Titulaire: Winlight Optics, 13016 Marseille (FR); CENTRE NATIONAL DE LA RECHERCHE SCIENTIFIQUE (CNRS), 75794 Paris Cedex 16 (FR)
(72) Inventeur: Prieto, Eric, 13004, Marseille (FR); Vives, Sébastien, 13012, Marseille (FR); Salaun, Yves, 84120, Pertuis (FR); Godefroy, Philippe, 13330, Pelissanne (FR); Soler, Daniel, 84240, La Tour d'Aigues (FR)
(74) Mandataire: Domange, Maxime

(56) Documents cités:
- WO-A-2005/019900
- WO-A-2005/053906
- US-A- 2 061 016
- US-A- 3 865 490
- US-A- 4 035 963
- US-B1- 6 504 650

## Description

### Arrière-plan de l'invention

La présente invention se rapporte au domaine général des procédés de fabrication de surfaces optiques, chacune supportée par une pièce élémentaire et chacune destinée à entrer dans la fabrication d'assemblages de surfaces optiques.

L'invention vise plus particulièrement un procédé pour fabriquer des surfaces optiques destinées à la fabrication d'assemblages de pièces élémentaires portant des surfaces optiques, communément appelées « systèmes disséqueurs d'images » et utilisées en astronomie.

De tels systèmes disséqueurs d'images sont utilisés pour adapter le champ de vue d'un télescope réalisant des images en deux dimensions au champ de vue d'un spectrographe, s'étendant sur une dimension.

En général, ces systèmes disséqueurs d'images sont composés d'au moins un assemblage de pièces élémentaires supportant des surfaces optiques associé à des miroirs de focalisation.

Les assemblages de surfaces optiques ont une fonction de réarrangement du faisceau. Placés dans le plan focal du télescope, ils permettent plus particulièrement d'échantillonner le champ de vue du télescope.

Les miroirs de focalisation reçoivent ensuite chacun des échantillons du champ de vue et reforment une image dont la taille et la forme longiligne correspond à celle de l'entrée du spectrographe.

L'invention trouve donc des applications, pour les assemblages de surfaces optiques obtenus, en instrumentation optique pour l'astrophysique ainsi que, de façon non limitative, dans divers dispositifs de traitement d'images, par exemple pour l'observation hyper-spectrale militaire ou médicale, ou encore pour la reconstitution d'un faisceau à partir d'une pluralité de faisceaux entrants.

Généralement, pour les applications astrophysiques, chaque assemblage de surfaces optiques est constitué de plusieurs dizaines de surfaces optiques pour chaque assemblage.

Actuellement, les systèmes disséqueurs d'images sont composés de miroirs rectangulaires polis en forme de sphère au niveau de la surface optique utile.

Il est déjà connu des procédés de fabrication de telles surfaces optiques, destinées à entrer dans la fabrication de tels assemblages de surfaces optiques. Selon une méthode traditionnelle, chaque surface optique fait l'objet d'un processus de polissage individuel de plusieurs jours.

Le polissage est tel que les angles de la normale à la surface polie selon les deux directions sont optimisés pour répondre aux spécifications optiques. Les arêtes des surfaces optiques doivent être nécessairement très fines. Cela implique aujourd'hui que chaque pièce élémentaire soit fabriquée individuellement à partir d'une sphère primaire préalablement creusée dans un bloc de matière.

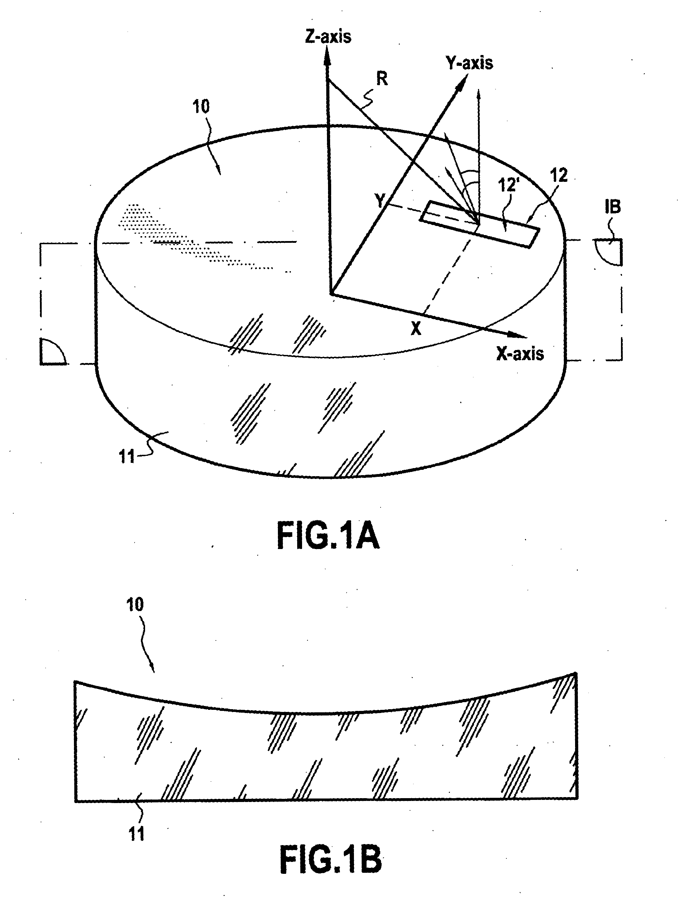

Un tel procédé est illustré sur la figure 1 où est représentée une sphère primaire 10 de diamètre R creusée dans un bloc de matière cylindrique 11, par exemple réalisé en verre. Les positions par rapport au bloc cylindrique sont repérées par rapport à un repère s'étendant sur trois dimensions X, Y et Z et centré sur le point situé à l'intersection de l'axe du cylindre 11 et de la sphère 10.

Pour que les spécifications obtenues soient suffisamment précises, il est nécessaire que seulement une, voire éventuellement deux, pièce(s) élémentaire(s) 12 soi(en)t extraite(s) dans chaque bloc de matière 10.

Cela est justifié par le fait que, pour que les propriétés angulaires en X et en Y de la surface optique 12' de la pièce élémentaire 12 soient correctes, il est nécessaire que cette pièce élémentaire 12 soit très précisément repérée sur la portion de sphère 10 creusée dans le cylindre 11. La position de la pièce élémentaire 12 dans le cylindre 11 correspond en effet très précisément aux caractéristiques angulaires requises dans l'optimisation de l'assemblage final.

Le procédé de fabrication consistant d'abord à polir le cylindre 11 en forme de sphère puis à extraire, après repérage sur le cylindre 11 (et donc sur la sphère creusée), la pièce élémentaire 12 est long et coûteux.

Il existe encore un autre procédé de fabrication de surfaces optiques pouvant être utilisé dans un assemblage apte à réarranger un ou des faisceau(x) optique(s).

Il s'agit d'utiliser un usinage diamant pour réaliser l'usinage individuel de chaque pièce élémentaire sans que celle-ci soit extraite d'un bloc de matériau originel ou pour réaliser l'usinage direct dans la masse d'un bloc de métal de plusieurs surfaces optiques.

Cet usinage diamant nécessite généralement l'usage de machines extrêmement précises et coûteuses et, malgré tout, leur utilisation ne permet pas d'atteindre actuellement les spécifications nécessaires à la fabrication d'assemblages de qualité compatible avec les applications astrophysiques permettant de réarranger des faisceaux optiques dans le domaine visible ou proche infrarouge.

Les méthodes existantes ne sont donc absolument pas optimales puisqu'elles permettent soit d'avoir un produit satisfaisant aux spécifications requises mais correspondant à un coût et à des délais de fabrication importants, soit d'obtenir un produit en dehors ou à la limite des spécifications voulues.

Dans la mesure où les futurs instruments utilisés en astrophysique mettront en oeuvre plusieurs dizaines d'assemblages de surfaces optiques, les procédés de fabrication connus se révèlent inadéquats pour réaliser un tel nombre de surfaces optiques tant d'un point de vue financier que du point de vue des délais de fabrication.

Le document US-A-3 865 490 divulgue un miroir réalisé par assemblage de pièces élémentaires.

### Objet et résumé de l'invention

La présente invention a donc pour but principal de palier de tels inconvénients en proposant un procédé de fabrication et d'assemblage de surfaces optiques, chacune supportée par une pièce élémentaire, les pièces élémentaires étant matériellement indépendantes les unes des autres, et destinées à entrer dans la fabrication de plusieurs assemblages de surfaces optiques par repositionnement des pièces élémentaires après polissage, ces assemblages étant chacun apte à réarranger un ou des faisceaux optiques en disséquant au moins un faisceau formant une image en autant de faisceaux/tranches formant une tranche de cette image que de pièces élémentaires et à rediriger ces faisceaux/tranches, chacun dans une direction particulière, directement ou non vers un appareil d'analyse, le procédé de fabrication comprenant au moins une étape de positionnement des pièces élémentaires les unes par rapport aux autres et une étape de polissage d'une surface spatialement continue sur l'ensemble des pièces élémentaires positionnées, l'étape de polissage étant commune pour l'ensemble des pièces élémentaires positionnées, le procédé incluant une étape préalable de préparation des pièces élémentaires dans laquelle les pièces élémentaires sont rendues telles qu'elles possèdent des propriétés géométriques destinées à leur positionnement pour l'étape de polissage et à leur repositionnement lors de la fabrication des assemblages.

Avec un tel procédé, il est possible de réaliser plusieurs dizaines de surfaces optiques avec un seul processus de polissage optique. Selon l'invention, le positionnement, lors de l'étape de polissage, des pièces élémentaires dédiées à chacun des assemblages est déterminé en fonction des caractéristiques de la surface polie nécessitée pour réaliser l'assemblage en question.

En positionnant l'ensemble des pièces élémentaires les unes par rapport aux autres puis, en réalisant une étape de polissage commune pour cet ensemble de pièces élémentaires positionnées, on réalise à l'aide d'un unique polissage, similaire à celui réalisé pour creuser la portion de sphère dans le bloc cylindrique, autant de pièces élémentaires portant déjà une surface optique que de pièces élémentaires positionnées dans cet ensemble.

Par rapport à la méthode consistant à polir une portion de sphère dans le bloc cylindrique puis à extraire la pièce élémentaire, on gagne N-1 polissages pour l'obtention de N pièces élémentaires supportant une surface optique.

On comprend bien que, parmi les avantages de ce procédé, on compte la capacité d'effectuer moins de polissages que d'assemblages de pièces élémentaires puisque, pour fabriquer N assemblages optiques de pièces élémentaires, on peut polir moins de N ensembles de pièces élémentaires positionnées puisque les pièces élémentaires produites grâce à un unique polissage peuvent être redistribuées pour former au moins une partie de N assemblages de pièces élémentaires.

En résumé, l'invention donne la capacité de polir une multiplicité de pièces élémentaires en même temps, ces pièces élémentaires étant destinées à être redistribuées dans divers assemblages de pièces élémentaires au final.

L'invention permet de polir plusieurs dizaines de pièces élémentaires en une seule fois en utilisant une technique de polissage classique, à la fois bien maîtrisée et connue, en terme de performance et de coût.

Il est donc possible d'obtenir une productivité accrue avec des coûts moins importants et en obtenant des spécifications des surfaces optiques équivalentes à celles obtenues par le procédé connu selon lequel chaque pièce élémentaire est réalisée de manière indépendante par extraction à partir d'un bloc cylindrique poli précédemment.

Selon l'invention, les pièces élémentaires ayant une géométrie spécifiquement dédiée à leur positionnement et à leur repositionnement, sont alors aisément positionnables et repositionnables pour la fabrication du ou des assemblage(s) final(aux) dans lequel ou lesquels elles sont destinées à entrer.

Les propriétés géométriques des pièces élémentaires permettant le positionnement des pièces élémentaires puis leur repositionnement évite que ces étapes soient délicates et mènent à des erreurs au niveau des caractéristiques des surfaces optiques polies sur les pièces élémentaires ou au niveau de l'assemblage final.

Selon une caractéristique particulière de l'invention, le procédé comprenant en outre une étape d'assemblage d'une partie des pièces élémentaires par repositionnement de ces pièces élémentaires en utilisant les propriétés géométriques de ces pièces élémentaires, cette partie des pièces élémentaires étant plusieurs ensembles de n pièces élémentaires successives dans leur positionnement pour polissage, ces n pièces élémentaires étant prises toutes les m, m supérieur à n, pièces élémentaires telles que positionnées pour le polissage et polies.

Le nombre m peut être, par exemple, un nombre quelconque supérieur ou égal à n. En particulier, m peut être un multiple de n. On obtient alors des assemblages similaires en réalisant les regroupements de pièces élémentaires.

Dans une réalisation particulière, l'étape d'assemblage d'une partie des pièces élémentaires par repositionnement de ces pièces élémentaires est telle que la partie des pièces élémentaires est l'ensemble des pièces prises n=une pièce élémentaire sur m=x pièces élémentaires telles que positionnées pour le polissage et polies.

Avec une telle caractéristique, il est possible de réaliser x assemblages similaires avec un même polissage en redistribuant/repositionnant une pièce élémentaire sur x dans chaque assemblage. Les assemblages obtenus seront en outre très similaires et seront globalement interchangeables. Il est avantageux de faire varier x de 2 à 100.

Selon une caractéristique avantageuse de l'invention, les pièces élémentaires sont des lames empilées dans leur positionnement pour le polissage et dans leur repositionnement lors de l'assemblage, la surface polie étant une des tranches dite frontale.

On entend par le terme « lame », une pièce élémentaire présentant une épaisseur substantiellement inférieure à ses autres dimensions. La forme générique est donc celle d'une plaque. Avec une telle caractéristique, dans la mesure où les lames s'étendent globalement chacune dans un plan, il est rendu aisé de les empiler les unes sur les autres avant de réaliser l'étape de polissage commune sur leurs tranches respectives placées dans un même plan.

Dans une réalisation préférentielle de l'invention, l'étape préalable de préparation des pièces élémentaires consistant à donner à chaque lame une longueur de tranche frontale permettant l'alignement d'un coté de la tranche frontale pour l'étape de polissage et le réalignement de l'autre coté de la tranche frontale pour l'étape d'assemblage, les pièces élémentaires sont positionnées, pour l'étape de polissage, par alignement des tranches dites latérales placées d'un premier coté des tranches frontales, puis repositionnées, dans l'étape d'assemblage, par alignement des tranches latérales placées de l'autre coté des tranches frontales et donc opposées aux précédentes tranches latérales par rapport à chaque tranche frontale polie,

Selon une caractéristique particulière de l'invention, les pièces élémentaires peuvent être réalisées en un matériau choisi parmi les verres, les céramiques, dont le carbure de silicium, les métaux.

L'art antérieur permettait jusqu'à aujourd'hui de ne réaliser des pièces élémentaires ne portant que des surfaces optiques portions de sphère.

Outre un tel polissage selon une surface sphérique, le procédé selon l'invention rend possible la fabrication de pièces élémentaires supportant des surfaces optiques suivant des formes asphériques dès lors que, selon l'invention, la surface spatialement continue est une surface strictement concave ou strictement convexe.

En effet, actuellement, la complexité de fabrication de chaque pièce élémentaire est telle qu'il n'est pas possible, ou du moins qu'il n'est pas aisé, de fabriquer des pièces élémentaires portant des surfaces optiques présentant une forme en portion de surface asphérique.

Dans un mode de réalisation particulier de cette application, un miroir de focalisation est placé sur chaque trajet des faisceaux/tranches vers l'appareil d'analyse.

Avantageusement, les miroirs sont géométriquement identiques. Cette caractéristique est rendue possible grâce aux paramètres géométriques des surfaces optiques.

L'invention concerne aussi un ensemble de pièces élémentaires supportant une surface optique et destinées à entrer dans la fabrication de plusieurs assemblages de surfaces optiques par repositionnement des pièces élémentaires après polissage, ces assemblages étant chacun apte à réarranger un ou des faisceaux optiques, caractérisé en ce que cet ensemble de pièces est issu d'un même polissage d'une surface spatialement continue, commun pour l'ensemble des pièces élémentaires positionnées et réalisé sur l'ensemble des pièces élémentaires spécialement positionnées pour ce polissage.

Un tel ensemble de pièces est le produit obtenu grâce à la mise en oeuvre d'un procédé selon l'invention.

Avec un tel ensemble ou au moins une partie de cet ensemble, on peut reconstituer au moins une portion de la surface continue polie ou des parties d'une portion de cette surface qui peut, par exemple, être une sphère. Cet ensemble peut être un assemblage, une portion d'assemblage ou encore être réparti sur une pluralité d'assemblages de pièces élémentaires.

Avantageusement, les pièces élémentaires possèdent des propriétés géométriques destinées à leur positionnement pour l'étape de polissage et à leur repositionnement lors de la fabrication de l'assemblage.

Cette caractéristique avantageuse permet de résoudre les problèmes de positionnement des pièces relativement les unes aux autres dans le premier positionnement (pour l'étape de polissage) et dans le second positionnement (dans lequel l'assemblage est finalement utilisé).

Dans un exemple de réalisation, la dimension de la face à polir des lames ou des pièces élémentaires d'un groupe de lames ou pièces élémentaires destinées à être polies dans une même étape est choisie en fonction de la situation de la lame dans l'empilement des lames et des caractéristiques attendues de la surface polie.

Cela permet d'aligner les lames d'abord d'un coté par une des deux faces latérales à la face à polir pour le premier positionnement puis de l'autre coté où l'alignement de l'autre face latérale permet de réaliser simplement et rapidement l'assemblage.

Dans une mise en oeuvre particulièrement simple de cette réalisation, les tailles des lames sont telles que, lorsqu'elles sont superposées et alignées suivant une de leurs faces latérales, l'ensemble des lames prend la forme générale d'un escalier. De tels «escaliers » peuvent être avantageusement empilés lors du positionnement des pièces élémentaires pour l'étape de polissage.

L'exemple illustrant le principe est donné pour des lames mais peut être étendu à tout type de pièces élémentaires.

L'invention concerne enfin un assemblage de pièces élémentaires apte à réarranger un ou des faisceaux optiques en disséquant au moins un faisceau formant une image en autant de faisceaux/tranches formant une tranche de cette image que de pièces élémentaires et à rediriger ces faisceaux/tranches, chacun dans une direction particulière, directement ou non vers un appareil d'analyse obtenu à partir d'un procédé selon l'invention à partir d'au moins une partie d'un ensemble de pièces élémentaires indépendantes les unes des autres, supportant une surface optique et destinées à entrer dans la fabrication de plusieurs assemblages de surfaces optiques par repositionnement des pièces élémentaires après polissage, cet ensemble de pièces étant issu d'un même polissage d'une surface spatialement continue, commun pour l'ensemble des pièces élémentaires positionnées et réalisé sur l'ensemble des pièces élémentaires spécialement positionnées pour ce polissage, les pièces élémentaires possédant des propriétés géométriques destinées à leur positionnement pour l'étape de polissage et à leur repositionnement lors de la fabrication des assemblages.

Avantageusement, les pièces élémentaires sont des lames empilées dans leur positionnement pour le polissage et dans leur repositionnement lors de l'assemblage, la surface polie étant une des tranches dite frontale.

Dans un mode de réalisation avantageux de l'invention, l'assemblage est obtenu avec une partie des pièces élémentaires par repositionnement de ces pièces élémentaires en utilisant les propriétés géométriques de ces pièces élémentaires, cette partie des pièces élémentaires étant plusieurs ensembles de n pièces élémentaires successives dans leur positionnement pour polissage, ces n pièces élémentaires étant prises toutes les m, m supérieur à n, pièces élémentaires telles que positionnées pour le polissage et polies.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- les figures 1a et 1b illustrent schématiquement un procédé de fabrication de pièces élémentaires selon l'art antérieur par une vue en perspective et une vue en coupe ;
- la figure 2 représente schématiquement le fonctionnement d'un assemblage de surfaces optiques au sein d'un système disséqueur d'images tel qu'utilisé en astronomie où l'invention trouve une application ;
- les figures 3a et 3b illustrent les deux étapes principales d'un procédé selon l'invention ;
- la figure 4 montre un schéma conceptuel d'organisation permettant de former deux assemblages de pièces élémentaires portant des surfaces optiques à partir d'une unique étape de polissage.

### Description détaillée

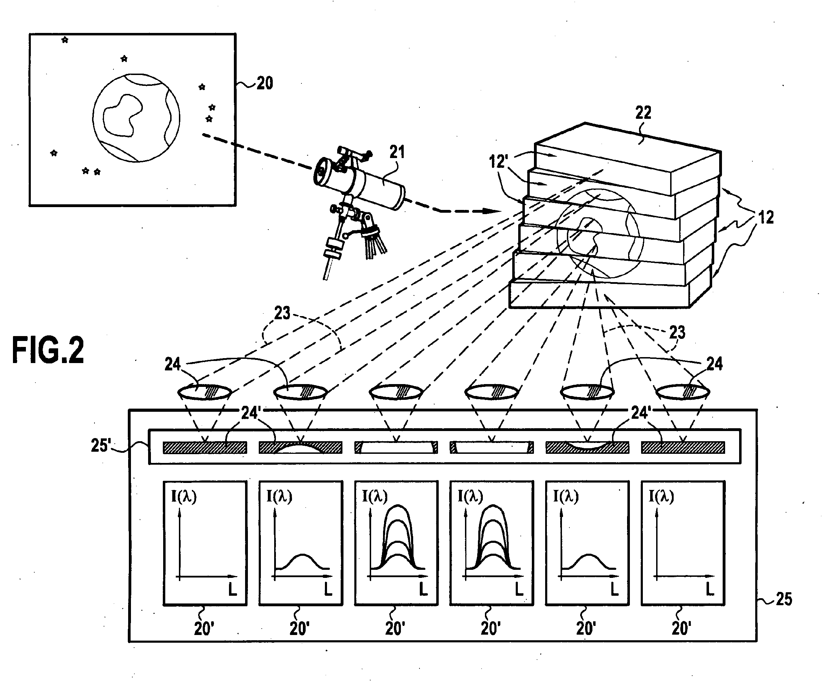

La figure 2 montre un contexte applicatif préférentiel de l'invention. Dans ce contexte, il s'agit de disséquer une image 20 telle que captée par un télescope 21, à l'aide d'un assemblage 22 de pièces élémentaires 12 portant chacune une surface optique 12'.

Dans l'assemblage 22, les pièces élémentaires 12 sont assemblées, par exemple par contact optique dans le cas de pièces élémentaires fabriquées en verre. L'assemblage peut également être réalisé par collage des pièces élémentaires les unes avec les autres ou encore à l'aide d'un maintien par pressage des pièces élémentaires.

Dans l'assemblage, les pièces élémentaires sont décalées les unes par rapport aux autres afin de réarranger le faisceau formant l'image 20 en une pluralité de faisceaux 23 représentant chacun une tranche de l'image 20.

Chacun de ces faisceaux 23 est redirigé vers un système optique placé sur le trajet de ce faisceau 23 et destiné à former une image/tranche de l'image 20 à partir du faisceau 23 à l'entrée 25' d'un spectrographe 25.

Les systèmes optiques destinés à former une image/tranche de l'image 20 à l'entrée du spectrographe 25 sont disposés relativement les uns par rapport aux autres de manière à ce que les tranches de l'image 20 se positionnent successivement et sans chevauchement dans la fente d'entrée 25' du spectroscope 25.

Il existe deux modes de réalisation pour réaliser les systèmes optiques destinés à former de telles images/tranches à l'entrée du spectrographe 25.

Selon le premier mode de réalisation illustré sur la figure 2, deux types d'éléments optiques sont utilisés. Il s'agit d'une ligne de miroirs pupille 24 et d'une ligne de miroirs fente 24'.

Dans le second mode de réalisation, un seul type d'éléments optiques est utilisé, il s'agit de miroirs de focalisation regroupant les fonctions de la ligne de miroirs pupille 24 et de la ligne de miroirs fente 24'.

Dans les deux modes de réalisation, l'assemblage 22 de pièces élémentaires 12 est situé dans le plan focal du télescope 21 et réarrange le faisceau représentant l'image 20, soit sur les miroirs pupille 24, soit en avant des miroirs de focalisation.

Dans la première réalisation, les miroirs pupille 24 forment alors l'image de chaque faisceau 23 sur le miroir fente 24' correspondant. L'ensemble des miroirs fente 24' permet alors de reformer une pupille unique regroupant chaque tranche de l'image 20 au niveau de la pupille du spectrographe 25. Cette pupille unique est formée des faisceaux venant des tranches de l'image 20.

Dans le deuxième mode de réalisation, les caractéristiques et la disposition de l'assemblage 22 et des miroirs de focalisation sont telles que les images des tranches de l'image 20 se situent sur la fente d'entrée 25' d'un spectroscope 25. En effet, les miroirs de focalisation forment alors directement, chacun, l'image d'une tranche à partir de chaque faisceau 23 représentant la tranche de l'image 20 le long de la fente d'entrée 25' du spectrographe 25. Les miroirs de focalisation réarrangent donc en même temps chaque tranche pour reformer une pupille unique sur la pupille du spectrographe 25.

Le spectroscope 25 réalise alors l'analyse spectrale des informations reçues par la fente d'entrée 25'. On obtient alors le spectre 20' pour chaque tranche de l'image 20. Pour des commodités de représentation, seules quelques courbes d'intensité I pour une longueur d'onde λ particulière en fonction de la dimension L le long de laquelle s'étalent les tranches de l'image 20 est représentée. En réalité le spectre est, bien sur, évalué et affiché sur une continuité de longueurs d'ondes. Le spectre peut alors être présenté selon diverses représentations à la disposition de l'homme du métier et bien connues de ce dernier. Par exemple, un graphe utilisant des couleurs pourra être fourni en sortie du spectroscope.

Comme présenté auparavant, l'invention se propose de simplifier et de rendre plus rapide et moins coûteuse la fabrication de l'assemblage 22 telle que représenté sur la figure 2.

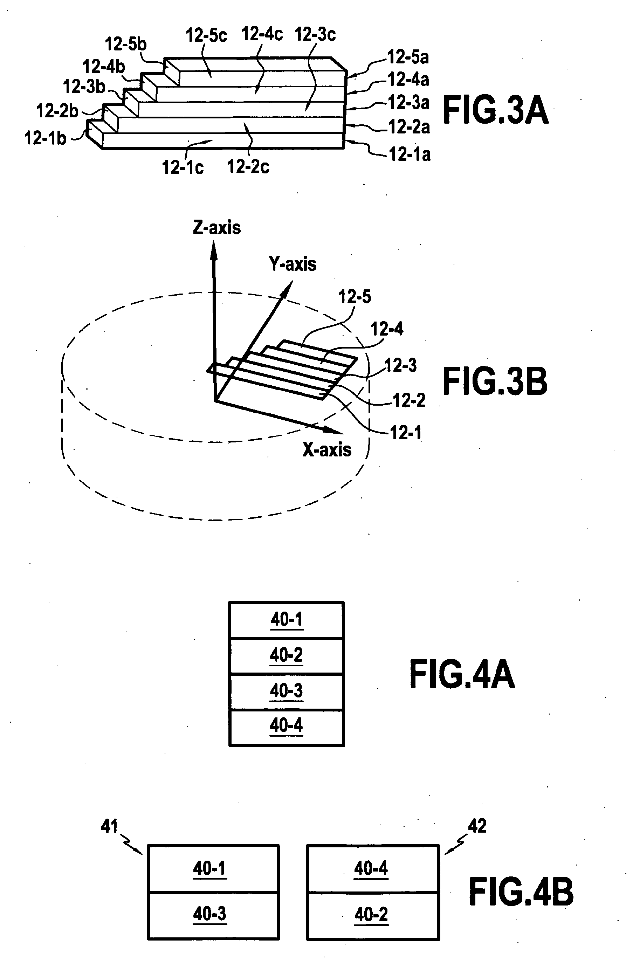

Les figures 3a et 3b illustrent les deux étapes principales du procédé selon l'invention.

Comme représentées sur la figure 3a, un ensemble de pièces élémentaires 12-1, 12-2, 12-3, 12-4, 12-5, par exemple réalisées en verre, sont positionnées d'une première manière particulière les unes par rapport aux autres.

Dans l'exemple proposé sur la figure 3, cette disposition géométrique est spécialement calculée en vue de l'étape de polissage commune selon l'invention et en vue du repositionnement des pièces élémentaires lors de la fabrication de l'assemblage 22.

Avantageusement, les pièces élémentaires sont en effet de tailles distinctes. Pour l'étape de polissage, une de leurs surfaces latérales, notée 12-ia (i allant de 1 à 5 dans l'exemple proposé), est alignée avec les surfaces latérales similaires des autres pièces élémentaires.

La position dans l'assemblage final sera avantageusement tel que les surfaces latérales 12-ib, opposées aux surfaces latérales 12-ia, soient à leur tour alignées. On facilite ainsi la mise en position des pièces élémentaires dans l'étape de positionnement puis dans celle de repositionnement sans introduire de préjudice au niveau de la qualité de l'assemblage final. Au contraire on assure ainsi l'exactitude du repérage des positions des pièces élémentaires lors du polissage et on permet un assemblage final très rapide.

La conception des pièces élémentaires dans le but de permettre ces positionnements et repositionnements faciles est originale et particulièrement avantageuse dans les applications visées.

Pour cette conception, il est en particulier possible d'utiliser un logiciel calculant les tailles et décalages des pièces élémentaires afin de pouvoir les aligner aisément pour le polissage puis de pouvoir les réaligner aisément pour fabriquer l'assemblage final. La taille, ici la largeur, de la pièce élémentaire est alors fonction directe de la position de la pièce élémentaire dans la sphère ou asphère.

Les pièces élémentaires sont avantageusement réalisées avec des lames de verre ou encore de céramique présentant des surfaces d'une qualité suffisante pour être maintenues par contact optique. Les pièces élémentaires peuvent aussi être maintenues les unes par rapport aux autres par collage ou pressage mécanique.

En positionnant ainsi l'ensemble des pièces élémentaires 12 relativement les unes par rapport aux autres, on obtient un équivalent d'une partie du bloc de matière 11 utilisé dans le procédé selon l'art antérieur exposé sur la figure 1. Une des surfaces latérales 12-ic, dite frontale, de chaque lame 12 est alors présentée comme si elle était à la surface du cylindre 11 ensuite creusée en forme sphérique ou asphérique. La face latérale, dite frontale, 12-ic est donc la surface optique 12' telle que référencée sur la figure 2.

Comme représenté sur la figure 3b, cette partie du bloc de matière est alors repérée spécifiquement en la plaçant sur l'axe des ordonnées Y en fonction du choix de la forme des surfaces optiques de l'assemblage final et en alignant les surfaces latérales 12-ia perpendiculairement à l'axe des abscisses X.

Cette position en X et en Y, qui est déterminée par rapport à la sphère ou asphère qui sera polie, détermine entièrement les caractéristiques angulaires des surfaces optiques sur chacune des pièces élémentaires 12. Ces caractéristiques sont optimisées de manière connue grâce à un logiciel de calcul optique, par exemple choisi parmi les logiciels Zemax, CodeV, Oslo, etc. ou d'outils informatiques développés spécifiquement pour la mise en oeuvre du procédé selon l'invention.

Dans le repérage par rapport à la sphère ultérieurement polie, on constate d'ailleurs que le décalage en X est libre et dépend de la position de la surface optique avant polissage, alors que le décalage en Y est imposé par la position de la pièce élémentaire dans l'assemblage final dans lequel elle sera intégrée.

La figure 3b illustre le polissage de l'ensemble repéré des pièces élémentaires 12 positionnées les unes par rapport aux autres selon une surface continue spécifique, ici une sphère, comme sur la figure 1. L'étape de polissage de la sphère est illustrée, sur la figure 3b, par la représentation en pointillés du bloc de matière selon la figure 1.

Le polissage est réalisé sur une des surfaces latérales, dite frontale, 12-ic de chaque lame.

Le nombre de pièces élémentaires d'abord positionnées les unes par rapport aux autres puis polies en même temps, peut atteindre plusieurs dizaines de pièces.

Le rayon de courbure des surfaces optiques obtenues est alors, bien sur, commun à toutes les surfaces optiques alors supportées par les pièces élémentaires 12 produites par le procédé selon l'invention.

L'étape de polissage est réalisée suivant une forme sphérique, asphérique, strictement concave ou strictement convexe. En particulier, la surface polie peut être cylindrique ou conique. L'équation de la surface polie peut aussi être polynomiale d'ordre supérieur ou égal à 2.

Les pièces élémentaires 12 sont ensuite séparées les unes des autres ou du moins décalées dans une position distincte de celle dans laquelle elles étaient positionnées lors de l'étape de polissage. Par exemple, comme évoqué auparavant, les lames seront alors réalignées par réalignement de l'une de leurs surfaces latérales.

Les pièces élémentaires sont alors, de nouveau, maintenues par contact optique ou par un autre moyen dans un ou plusieurs assemblage(s) final(s) destinés à entrer dans la fabrication de système(s) disséqueur(s) d'images.

La façon dont les pièces élémentaires sont réassemblées est, en réalité, établie préalablement à la mise en oeuvre du procédé lui-même. Les assemblages de pièces élémentaires 12 ensuite obtenus présentent donc des caractéristiques déjà choisies lors de la détermination des différents paramètres, notamment les tailles relatives des lames, utilisés lors de la mise en oeuvre pratique du procédé selon l'invention.

La figure 4 illustre une telle mise en oeuvre pratique du procédé selon l'invention en tenant compte préalablement des caractéristiques finales des assemblages souhaités.

Sur cette figure, on illustre également la possibilité offerte par le procédé selon l'invention de réaliser plusieurs assemblages, ici deux, à partir d'une unique étape de polissage.

Sur la figure 4a, sont représentés quatre ensembles 40-1, 40-2, 40-3, 40-4 comprenant chacun plusieurs pièces élémentaires, par exemple cinq, empilées les unes sur les autres ainsi que représentés sur la figure 3a. Ce positionnement des ensembles de pièces élémentaires est conservé lors de la phase de polissage.

Le polissage d'une sphère ou asphère sur la face visible des ensembles de pièces représentée sur la figure 4a permet de former des surfaces optiques destinées à entrer dans la fabrication de deux assemblages distincts 41 et 42.

L'assemblage 41 est constitué par réassemblage des ensembles de pièces élémentaires empilées 40-1 et 40-3. L'assemblage 42 est constitué par réassemblage des ensembles de pièces élémentaires 40-2 et 40-4.

A l'intérieur de chacun des ensembles 40-1, 40-2, 40-3, 40-4 de pièces élémentaires, les pièces élémentaires sont également repositionnées l'une par rapport à l'autre, par exemple à la manière évoquée précédemment en réalignant une des surfaces latérales. Pour des raisons de simplicité de représentation, la forme des empilements lors de l'étape de polissage et la forme finale de chaque assemblage, qui seraient en escalier, ne sont pas représentées sur cette figure 4.

On voit bien ici qu'il est possible d'obtenir non seulement une pluralité de pièces élémentaires supportant des surfaces optiques répondant aux spécifications requises pour l'application astronomique mais, également, qu'il est possible, grâce à l'invention, d'obtenir plusieurs assemblages de pièces élémentaires, et tout cela, grâce à une unique et même étape de polissage.

On constate en outre que, dans l'exemple présenté sur la figure 4, les assemblages 41 et 42 peuvent être identiques grâce à la symétrie qu'il est possible d'introduire respectivement entre les ensembles de pièces élémentaires 40-1 et 40-4 et entre les ensembles de pièces élémentaires 40-2 et 40-3.

On remarque enfin que diverses mises en oeuvre peuvent être réalisées selon les principes de l'invention définis dans les revendications suivantes. Notamment, dans l'exemple donné sur la figure 4, les quatre ensembles 40-1, 40-2, 40-3, 40-4 de pièces élémentaires ont la même taille et présentent donc a priori le même nombre de pièces élémentaires. On pourrait tout à fait envisager, selon l'invention, que ces ensembles comprennent des nombres distincts de pièces élémentaires, par exemple que les ensembles 40-1 et 40-4 comprennent n pièces élémentaires alors que les ensembles 40-2 et 40-3 comprennent n' pièces.

Il est également possible de réaliser plus de deux assemblages selon le principe présenté sur la figure 4 en empilant, par exemple pour réaliser y assemblages, des ensembles de n pièces élémentaires. Les ensembles destinés à entrer dans la fabrication d'un même assemblage sont alors séparés de m=y*n pièces élémentaires.

Un tel principe de réassemblage par ensembles de pièces élémentaires est également possible avec les pièces élémentaires prises seules, par exemple en employant une pièce élémentaire sur deux dans l'ensemble des pièces positionnées pour le polissage pour réaliser un premier assemblage et l'autre pièce élémentaire sur deux pour réaliser un autre assemblage similaire. Ce dernier principe d'entrelacement pour le polissage puis de dés-entrelacement pour la fabrication des assemblages peut bien entendu être étendu à la fabrication d'un nombre supérieur à deux d'assemblages en prenant une pièce élémentaires sur x pour réaliser chaque assemblage.

## Revendications

1. Procédé de fabrication de surfaces optiques [12'], chacune supportée par une pièce élémentaire [12], les pièces élémentaires étant physiquement indépendantes les unes des autres, et destinées à entrer dans la fabrication de plusieurs assemblages [22] de surfaces optiques [12'] par repositionnement des pièces élémentaires [12] après polissage, ces assemblages [22] étant chacun apte à réarranger un ou des faisceaux optiques en disséquant au moins un faisceau formant une image [20] en autant de faisceaux/tranches [23] formant une tranche [24'] de cette image [20] que de pièces élémentaires [12] et à rédiriger ces faisceaux/tranches [23], chacun dans une direction particulière, directement ou non vers un appareil d'analyse [25], le procédé de fabrication comprenant au moins une étape de positionnement des pièces élémentaires [12] les unes par rapport aux autres et une étape de polissage d'une surface spatialement continue [10] sur l'ensemble des pièces élémentaires [12] positionnées, l'étape de polissage étant commune pour l'ensemble des pièces élémentaires [12] positionnées **caractérisé en ce que** le procédé inclue une étape préalable de préparation des pièces élémentaires [12] dans laquelle les pièces élémentaires [12] sont rendues telles qu'elles possèdent des propriétés géométriques destinées à leur positionnement pour l'étape de polissage et à leur repositionnement lors de la fabrication des assemblages [22],

2. Procédé selon la revendication 1, **caractérisé en ce qu'**il comprend en outre une étape d'assemblage d'une partie des pièces élémentaires par repositionnement de ces pièces élémentaires en utilisant les propriétés géométriques de ces pièces élémentaires, cette partie des pièces élémentaires étant plusieurs ensembles [40-1,40-2,40-3,40-4] de n pièces élémentaires successives dans leur positionnement pour polissage, ces n pièces élémentaires étant prises toutes les m, m supérieur ou égal à n, pièces élémentaires telles que positionnées pour le polissage et polies.

3. Procédé selon l'une des revendications précédentes, **caractérisé en ce que** l'étape d'assemblage d'une partie des pièces élémentaires [12] par repositionnement de ces pièces élémentaires [12] est telle que la partie des pièces élémentaires [12] est l'ensemble des pièces prises n=une pièce élémentaire [12] sur m=x pièces élémentaires [12] telles que positionnées pour le polissage et polies.

4. Procédé selon la revendication 3, **caractérisé en ce que** x varie de 2 à 100.

5. Procédé selon l'une des revendications précédentes, **caractérisé en ce que** les pièces élémentaires [12] sont des lames empilées dans leur positionnement pour le polissage et dans leur repositionnement lors de l'assemblage, la surface polie étant une des tranches dite frontale [12-1c,12-2c,12-3c,12-4c,12-5c].

6. Procédé selon la revendication 5, **caractérisé en ce que**, l'étape préalable de préparation des pièces élémentaires [12] consistant à donner à chaque lame une longueur de tranche frontale [12-1c,12-2c,12-3c,12-4c,12-5c] permettant l'alignement d'un coté de la tranche frontale pour l'étape de polissage et le réalignement de l'autre coté de la tranche frontale pour l'étape d'assemblage, les pièces élémentaires sont positionnées, pour l'étape de polissage, par alignement des tranches dites latérales placées d'un premier coté [12-1a,12-2a,12-3a,12-4a,12-5a] des tranches frontales[12-1c,12-2c,12-3c,12-4c,12-5c], puis repositionnées, dans l'étape d'assemblage, par alignement des tranches latérales placées de l'autre coté [12-1b,12-2b,12-3b,12-4b,12-5b] des tranches frontales [12-1c,12-2c,12-3c,12-4c,12-5c] et donc opposées aux précédentes tranches latérales par rapport à chaque tranche frontale polie,

7. Procédé selon l'une des revendications précédentes, **caractérisé en ce que** la surface spatialement continue [10] est une surface strictement concave ou strictement convexe, sphérique ou asphérique.

8. Procédé selon l'une des revendications précédentes, **caractérisé en ce qu'**un miroir de focalisation est placé sur chaque trajet des faisceaux/tranches [23] vers l'appareil d'analyse [25].

9. Procédé selon la revendication 8, **caractérisé en ce que** les surfaces optiques [12'] sont conçues de telle manière que les miroirs sont géométriquement identiques.

10. Assemblage [22] de pièces élémentaires [12] apte à réarranger un ou des faisceaux optiques en disséquant au moins un faisceau formant une image [20] en autant de faisceaux/tranches [23] formant une tranche [24'] de cette image [20] que de pièces élémentaires [12] et à rediriger ces faisceaux/tranches [23], chacun dans une direction particulière, directement ou non vers un appareil d'analyse [25] obtenu à partir d'un procédé selon l'une des revendications 1 à 9 à partir d'au moins une partie d'un ensemble de pièces élémentaires [12] indépendantes les unes des autres, supportant une surface optique [12'] et destinées à entrer dans la fabrication de plusieurs assemblages [22] de surfaces optiques [12'] par repositionnement des pièces élémentaires [12] après polissage, cet ensemble de pièces [12] étant issu d'un même polissage d'une surface spatialement continue [10], commun pour l'ensemble des pièces élémentaires [12] positionnées et réalisé sur l'ensemble des pièces élémentaires [12] spécialement positionnées pour ce polissage, les pièces élémentaires [12] possédant des propriétés géométriques destinées à leur positionnement pour l'étape de polissage et à leur repositionnement lors de la fabrication des assemblages [12].

11. Assemblage selon la revendication 10, **caractérisé en ce que** les pièces élémentaires [12] sont des lames empilées dans leur positionnement pour le polissage et dans leur repositionnement lors de l'assemblage, la surface polie étant une des tranches dite frontale [12-1c,12-2c,12-3c,12-4c,12-5c].

## Claims

1. A method of fabricating optical surfaces (12'), each supported by an individual piece (12), the individual pieces being physically independent of one another and designed to enter into the fabrication of a plurality of assemblies (22) of optical surfaces (12') by repositioning individual pieces (12) after polishing, each of said assemblies (22) being suitable for rearranging one or more light beams by dissecting at least one beam forming an image (20) into as many beams/slices (23) forming a slice (24') of said image (20) as there are individual pieces (12) and for redirecting each of these beams/slices (23) in a particular direction directly or indirectly towards an analysis appliance (25), the fabrication method including at least a step of positioning the individual pieces (12) relative to one another and a step of polishing a spatially continuous surface (10) over all of the positioned individual pieces (12), the polishing step being common for all of the positioned individual pieces (12), the method being **characterized in that** it includes a prior step of preparing the individual pieces (12), in which step the individual pieces (12) are made so that they possess geometrical properties for positioning them for the polishing step and for repositioning them during fabrication of the assemblies (22).

2. A method according to claim 1, **characterized in that** it further includes a step of assembling a fraction of the individual pieces by repositioning said individual pieces using the geometrical properties of said individual pieces, this fraction of individual pieces being a plurality of sets (40-1, 40-2, 40-3, 40-4) of n individual pieces that are in succession in their position for polishing, these n individual pieces being taken every m individual pieces as positioned for polishing and as polished, where m is greater than or equal to n.

3. A method according to either preceding claim, **characterized in that** the step of assembling a fraction of the individual pieces (12) by repositioning said individual pieces (12) is such that the fraction of individual pieces (12) is the set of pieces taken so that n equals one individual piece (12) in m=x individual pieces (12) as positioned for polishing and as polished.

4. A method according to claim 3, **characterized in that** x lies in the range 2 to 100.

5. A method according to any preceding claim, **characterized in that** the individual pieces (12) are slides that are stacked in their position for polishing and in their repositioning during assembly, the polished surface of each of them being a "front" edge surface (12-1c, 12-2c, 12-3c, 12-4c, 12-5c).

6. A method according to claim 5, **characterized in that** the prior step of preparing the individual pieces (12) consists in giving each slide a front edge face (12-1c, 12-2c, 12-3c, 12-4c, 12-5c) of length enabling one side of the front edge face to be aligned for the polishing step and the other side of the front edge face to be realigned for the assembly step, and the individual pieces are positioned for the polishing step by aligning "lateral" edge faces placed on a first side (12-1a, 12-2a, 12-3a, 12-4a, 12-5a) of the front edge faces (12-1c, 12-2c, 12-3c, 12-4c, 12-5c), and are then repositioned during the assembly step by aligning the lateral edge faces placed on the other side (12-1b, 12-2b, 12-3b, 12-4b, 12-5b) of the front edge faces (12-1c, 12-2c, 12-3c, 12-4c, 12-5c) and thus opposite to the preceding lateral edge faces relative to each polished front edge face.

7. A method according to any preceding claim, **characterized in that** the spatially continuous surface (10) is a surface that is strictly concave or strictly convex, spherical, or aspherical.

8. A method according to any preceding claim, **characterized in that** a focusing mirror is placed on each beam/slice path (23) towards the analysis appliance (25).

9. A method according to claim 8, **characterized in that** the optical surfaces (12') are designed in such a manner that the mirrors are geometrically identical.

10. An assembly (22) of individual pieces (12) suitable for rearranging one or more light beams by dissecting at least one beam forming an image (20) into as many beams/slices (23) forming respective slices (24') of said image (20) as there are individual pieces (12), and for redirecting each of said beams/slices (23) in a particular direction, directly or indirectly towards an analysis appliance (25), and obtained by a method according to any one of claims 1 to 9 from at least a fraction of a set of mutually independent individual pieces (12) each supporting an optical surface (12') and designed to enter into the fabrication of a plurality of assemblies (12) of optical surfaces (12') by repositioning the individual pieces (12) after polishing, said set of pieces (12) being derived from a single operation of polishing a spatially continuous surface (10) that is common for the set of positioned individual pieces (12) and that is performed on the set of individual pieces (12) while they are specially positioned for said polishing, the individual pieces (12) possessing geometrical properties to enable them to be positioned for the polishing step and to be repositioned during fabrication of the assemblies (12).

11. An assembly according to claim 10, **characterized in that** the individual pieces (12) are slides that are stacked in their position for polishing and when repositioned during assembly, their polished surfaces being one of their "front" edge faces (12-1c, 12-2c, 12-3c, 12-4c, 12-5c).

## Patentansprüche

1. Verfahren zur Herstellung von optischen Flächen (12'), die jeweils von einem Elementarteil (12) getragen werden, wobei die Elementarteile physisch voneinander unabhängig und dazu bestimmt sind, bei der Herstellung von mehreren Baugruppen (22) von optischen Flächen (12') durch Umpositionieren der Elementarteile (12) nach dem Polieren beteiligt zu sein, wobei diese Baugruppen (22) jeweils geeignet sind, einen oder mehrere optische Strahlen umzuordnen, wobei mindestens ein Strahl, der ein Bild (20) darstellt, in ebenso viele Strahlen/Streifen (23), die einen Strahl (24') dieses Bildes (20) bilden, wie Elementarteile (12) gespalten wird, und diese Strahlen/Streifen (23) jeweils in eine gesonderte Richtung direkt oder nicht zu einem Analysegerät (25) umzulenken, wobei das Herstellungsverfahren mindestens einen Schritt der Positionierung der Elementarteile (12) zueinander und einen Schritt des Polierens einer räumlich durchgehenden Fläche (10) auf der Gesamtheit der positionierten Elementarteile (12) umfaßt, wobei der Schritt des Polierens für die Gesamtheit der Elementarteile (12) gemeinsam ist, **dadurch gekennzeichnet, daß** das Verfahren einen vorherigen Schritt der Vorbereitung der Elementarteile (12) einschließt, bei dem die Elementarteile (12) derart vorbereitet werden, daß sie geometrische Eigenschaften besitzen, die für ihre Positionierung für den Schritt des Polierens und ihre Umpositionierung bei der Herstellung der Baugruppen (22) bestimmt sind.

2. Verfahren nach Anspruch 1, **dadurch gekennzeichnet, daß** es ferner einen Schritt des Zusammenbaus eines Teils der Elementarteile durch Umpositionieren dieser Elementarteile umfaßt, wobei die geometrischen Eigenschaften dieser Elementarteile genutzt werden, wobei dieser Teil der Elementarteile in mehreren Einheiten (40-1, 40-2, 40-3, 40-4) von n aufeinander folgenden Elementarteilen in ihrer Positionierung für das Polieren besteht, wobei diese n Elementarteile alle m, wobei m größer oder gleich n, Elementarteile, wie für das Polieren positioniert und poliert, genommen werden.

3. Verfahren nach einem der vorhergehenden Ansprüche, **dadurch gekennzeichnet, daß** der Schritt des Zusammenbaus eines Teils der Elementarteile (12) durch Umpositionieren dieser Elementarteile (12) derart ist, daß der Teil der Elementarteile (12) die Gesamtheit der genommenen Teile n = ein Elementarteil (12) zu m = x Elementarteile (12), wie für das Polieren positioniert und poliert, ist.

4. Verfahren nach Anspruch 3, **dadurch gekennzeichnet, daß** x von 2 bis 100 variiert.

5. Verfahren nach einem der vorhergehenden Ansprüche, **dadurch gekennzeichnet, daß** die Elementarteile (12) Lamellen sind, die in ihrer Positionierung für das Polieren und in ihrer Umpositionierung beim Zusammenbau gestapelt sind, wobei die polierte Fläche einer der so genannten frontalen Streifen (12-1 c, 12-2c, 12-3c, 12-4c, 12-5c) ist.

6. Verfahren nach Anspruch 5, **dadurch gekennzeichnet, daß**, wobei der vorherige Schritt der Vorbereitung der Elementarteile (12) darin besteht, jeder Lamelle eine Länge eines frontalen Streifens (12-1 c, 12-2c, 12-3c, 12-4c, 12-5c) zu geben, wodurch die Ausrichtung einer Seite des frontalen Streifens für den Schritt des Polierens und die Neuausrichtung der anderen Seite des frontalen Streifens für den Schritt des Zusammenbaus ermöglicht wird, die Elementarteile für den Schritt des Polierens durch Ausrichtung der so genannten seitlichen Streifen, die auf einer ersten Seite (12-1 a, 12-2a, 12-3a, 12-4a, 12-5a) der frontalen Streifen (12-1 c, 12-2c, 12-3c, 12-4c, 12-5c) angeordnet sind, positioniert werden und dann beim Schritt des Zusammenbaus durch Ausrichtung der seitlichen Streifen (12-1 b, 12-2b, 12-3b, 12-4b, 12-5b), die auf der anderen Seite der frontalen Streifen (12-1 c, 12-2c, 12-3c, 12-4c, 12-5c) angeordnet sind und somit den vorhergehenden seitlichen Streifen in bezug zu jedem polierten frontalen Streifen gegenüberliegen, umpositioniert werden.

7. Verfahren nach einem der vorhergehenden Ansprüche, **dadurch gekennzeichnet, daß** die räumlich durchgehende Fläche (10) eine streng konkave oder streng konvexe, sphärische oder asphärische Fläche ist.

8. Verfahren nach einem der vorhergehenden Ansprüche , **dadurch gekennzeichnet, daß** ein Fokussierspiegel auf jeder Bahn der Strahlen/Streifen (23) zum Analysegerät (25) angeordnet ist.

9. Verfahren nach Anspruch 8, **dadurch gekennzeichnet, daß** die optischen Flächen (12') derart ausgeführt sind, daß die Spiegel geometrisch identisch sind.

10. Baugruppe (22) von Elementarteilen (12), die einen oder mehrere optischen Strahlen umordnen können, wobei mindestens ein ein Bild (20) darstellender Strahl in ebenso viele Strahlen/Streifen (23), die einen Streifen (24') dieses Bildes (20) darstellen, wie Elementarteile (12) geteilt wird, und diese Strahlen/Streifen (23) jeweils in eine gesonderte Richtung direkt oder nicht zu einem Analysegerät (25) umlenken können, hergestellt durch ein Verfahren nach einem der Ansprüche 1 bis 9 aus mindestens einem Teil einer Gesamtheit von voneinander unabhängigen Elementarteilen (12), die eine optische Fläche (12') tragen und dazu bestimmt sind, bei der Herstellung von mehreren Baugruppen (22) von optischen Flächen (12') durch Umpositionieren der Elementarteile (12) nach dem Polieren beteiligt zu sein, wobei diese Gesamtheit von Teilen (12) aus einem selben Polieren einer räumlich durchgehenden Fläche (10) stammt, das für die Gesamtheit der positionierten Elementarteile (12) gemeinsam ist und an der Gesamtheit der speziell für dieses Polieren positionierten Elementarteile (12) vorgenommen wird, wobei die Elementarteile (12) geometrische Eigenschaften besitzen, die für ihre Positionierung für den Schritt des Polierens und ihre Umpositionierung bei der Herstellung der Baugruppen (12) bestimmt sind.

11. Baugruppe nach Anspruch 10, **dadurch gekennzeichnet, daß** die Elementarteile (12) Lamellen sind, die in ihrer Positionierung für das Polieren und in ihrer Umpositionierung beim Zusammenbau gestapelt sind, wobei die polierte Fläche einer der so genannten frontalen Streifen (12-1 c, 12-2c, 12-3c, 12-4c, 12-5c) ist.
